# EUROPEAN PATENT APPLICATION

(11) **EP 4 722 289 A1**
(43) Date of publication of application: **08.04.2026**
(21) Application number: 24204284.4
(22) Date of filing: 02.10.2024
(51) Int. Cl.: C08L 23/14, C08L 23/20, C08L 77/02, C08L 77/06

(54) **POLYAMIDE COMPOSITION**

(71) Applicant: Evonik Oxeno GmbH & Co. KG, 45772 Marl (DE)
(72) Inventor: KLEINSCHMIDT, Denise, 40235 Düsseldorf (DE); RICHTER, Alexander, 45721 Haltern am See (DE); PETZOLD, Florian, 45657 Recklinghausen (DE); WIELPÜTZ, Martin, 48308 Senden (DE)
(74) Representative: Evonik Patent Association

(57) **Abstract**

The present invention relates to a composition comprising at least one polyamide, wherein the composition further comprises at least one amorphous poly-alpha-olefin in an amount of 0,1 to 15 % by weight based on the total weight of polyamides and amorphous poly-alpha-olefines present in the composition, to a process for producing such compositions and to the use thereof.

## Description

The present invention relates to a composition comprising at least one polyamide, wherein the composition further comprises at least one amorphous poly-alpha-olefin in an amount of 0,1 to 15 % by weight based on the total weight of polyamides and amorphous poly-alpha-olefines present in the composition, to a process for producing such compositions and to the use thereof.

Products made from polyamides prepared by injection moulding or extrusion are well known in the art. An overview about polyamide is given on the web side "Polyamide". In: Wikipedia - Die freie Enzyklopädie. Bearbeitungsstand: 2. Mai 2024, 07:06 UTC.

URL: https://de.wikipedia.orq/w/index.php?title=Polyamide&oldid=244590435 .

When polyamides are used as raw material in injection moulding or extrusion processes the material properties are important and effect the processing behavior such as energy consumption, cycle times, processing window, and mechanical and thermal stress.

EP 4121483 B1 describes polyamide compositions comprising a plasticizer based on ethylene glycol polymers or oligomers and optionally an elastomeric polymer. These elastomeric polymers are preferably based on ethylene-copolymers or polyethylene or polypropylene. Form the resulting compositions tensile bars were produced by injection molding and tested. The description is silent about any benefits in processing behavior.

It was therefore an object of the present invention to improve the processing behavior of polyamide compositions, especially of polyamide compositions comprising reinforcing fibers.

The inventors surprisingly found, that compositions comprising at least one polyamide and further comprising at least one amorphous poly-alpha-olefin in an amount of 0,1 to 15 % by weight based on the total weight of polyamides and amorphous poly-alpha-olefines present in the composition can solve one or more of the recited problems.

The present invention therefore provides compositions as defined in the claims and described in more detail in the following description comprising at least one polyamide, wherein the composition further comprises at least one amorphous poly-alpha-olefin in an amount of 0,1 to 15 % by weight based on the total weight of polyamides and amorphous poly-alpha-olefines present in the composition.

The present invention also provides a process for producing such compositions as defined in the claims and described in more detail in the following description.

The present invention further provides the use of the compositions according to the invention as defined in the claims and described in more detail in the following description.

It was found by the inventors that the melt viscosity of the composition according to the invention depends on the set shear velocity. As shear rates increased, a reduction in viscosity was recorded (shear thinning). This is tantamount to an improvement in the fluidity (flowability) of the polyamide processing.

This improvement in processing behavior can lead to advantages in injection molding of polyamide, especially fiber reinforced polyamide, such as lower energy consumption, shorter cycle times, widening of the processing window, and the reduction of discoloration due to mechanical and thermal stress.

The compositions according to the invention, the process according to the invention and the use according to the invention of the compositions are described by way of example hereinafter, without any intention that the invention be restricted to these illustrative embodiments. Where ranges, general formulae or compound classes are specified below, these are intended to comprise not only the corresponding ranges or groups of compounds which are explicitly mentioned but also all subranges and subgroups of compounds which can be obtained by removing individual values (ranges) or compounds. Where documents are cited in the context of the present description, their content shall fully form part of the disclosure content of the present invention, particularly in respect of the matters referred to. Where figures are reported hereinbelow in percent, these figures are percentages by weight unless otherwise stated. Where averages, for example molar mass averages, are reported hereinbelow, these are the numerical average unless stated otherwise. Where material characteristics, such as for example viscosities or the like, are reported hereinbelow, these are material characteristics at 25°C unless otherwise stated. Where chemical (empirical) formulae are used in the present invention, the reported indices may be either absolute numbers or average values. For polymeric compounds, the indices preferably represent average values.

The compositions according to the invention comprising at least one polyamide, are characterized in that the compositions further comprise at least one amorphous poly-alpha-olefin in an amount of 0,1 to 15 % by weight, preferably 1 to 10 % by weight, based on the total weight of polyamides and amorphous poly-alpha-olefines present in the composition.

The polyamide employed can be any polyamide known in the art. The polyamides of the composition of the invention preferably have an intrinsic viscosity of from 90 to 350 ml/g, more preferably from 110 to 240 ml/g, determined in a 0.5% strength by weight solution in 96% strength by weight sulfuric acid at 25 °C according to ISO 307, unless indicated otherwise.

Preference is given to semicrystalline or amorphous polyamides with a molecular weight (weight average) of at least 5000 g/mol, described by way of example in the following US patents: 2 071 250, 2 071 251, 2 130 523, 2 130 948, 2 241 322, 2 312 966, 2 512 606, and 3 393 210.

Examples of these are polyamides that derive from lactams having from 7 to 13 ring members, e.g. polycaprolactam, polycaprylolactam, and polylaurolactam, and also polyamides obtained via reaction of dicarboxylic acids with diamines.

Dicarboxylic acids which may be used are alkanedicarboxylic acids having from 6 to 12, in particular from 6 to 10 carbon atoms, and aromatic dicarboxylic acids. Merely as examples, those that may be mentioned here are adipic acid, azelaic acid, sebacic acid, dodecanedioic acid and terephthalic and/or isophthalic acid.

Particularly suitable diamines are alkanediamines having from 6 to 12, in particular from 6 to 8 carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane, and 1,5-diami-no-2-methylpentane.

Preferred polyamides are polyhexamethyleneadipamide, polyhexamethylenesebacamide, and polycaprolactam, and also nylon-6/6,6 copolyamides, in particular having a proportion of from 5 to 95 wt% of caprolactam units (e.g. Ultramid^{®} C31 from BASF SE).

Other suitable polyamides are obtainable from w-aminoalkylnitriles, e.g. aminocapronitrile (PA 6) and adipodinitrile with hexamethylenediamine (PA 66) via what is known as direct polymerization in the presence of water, for example as described in DE-A 10313681, EP-A 1198491 and EP 922065.

Mention may also be made of polyamides obtainable, by way of example, via condensation of 1,4-diaminobutane with adipic acid at an elevated temperature (nylon-4,6). Preparation processes for polyamides of this structure are described by way of example in EP-A 38 094, EP-A 38 582, and EP-A 39 524.

Other suitable examples are polyamides obtainable via copolymerization of two or more of the abovementioned monomers, and mixtures of two or more polyamides in any desired mixing ratio. Particular preference is given to mixtures of nylon-6,6 with other polyamides, in particular blends of nylon-6 and nylon-66, and to nylon-6/6,6 copolyamides and nylon-6,6/6 copolyamides.

Other copolyamides which have proven particularly advantageous are semiaromatic copolyamides, such as PA 6/6T and PA 66/6T, where the triamine content of these is less than 0.5 wt%, preferably less than 0.3 wt% (see EPA 299 444). Other polyamides resistant to high temperatures are known from EP-A 19 94 075 (PA6T/6I/MXD6). The processes described in EP-A 129 195 and 129 196 can be used to prepare the preferred semiaromatic copolyamides with low triamine content.

The following list, which is not comprehensive, comprises the polyamides mentioned and other polyamides for the purposes of the invention, and the monomers comprised:
PA 4 based on Pyrrolidone, PA 6 based on ε-Caprolactam, PA 7 based on Ethanolactam, PA 8 based on Caprylolactam, PA 9 based on 9-Aminopelargonic acid, PA 11 based on 11-Aminoundecanoic acid, PA 12 based on Laurolactam, PA 46 based on Tetramethylenediamine and adipic acid, PA 66 based on Hexamethylenediamine and adipic acid, PA 69 based on Hexamethylenediamine and azelaic acid, PA 610 based on Hexamethylenediamine and sebacic acid, PA 612 based on Hexamethylenediamine and decanedicarboxylic acid, PA 613 based on Hexamethylenediamine and undecanedicarboxylic acid, PA 1212 based on 1,12-Dodecanediamine and decanedicarboxylic acid, PA 1313 based on 1,13-Diaminotridecane and undecanedicarboxylic acid, PA 6T based on Hexamethylenediamine and terephthalic acid, PA MXD6 based on m-Xylylenediamine and adipic acid, PA 6I based on Hexamethylenediamine and isophthalic acid, PA 6-3-T based on Trimethylhexamethylenediamine and terephthalic acid, PA 6/6T (see PA 6 and PA 6T), PA 6/66 (see PA 6 and PA 66), PA 6/12 (see PA 6 and PA 12), PA 66/6/610 (see PA 66, PA 6 and PA 610), PA 61/6T (see PA 6I and PA 6T), PA PACM based on 12 Diaminodicyclohexylmethane and laurolactam, PA 6I/6T/PACM based on PA 6I/6T and diaminodicyclohexylmethane, PA 12/MACMI based on Laurolactam, dimethyldiaminodicyclohexylmethane, and isophthalic acid, PA 12/MACMT based on Laurolactam, dimethyldiaminodicyclohexylmethane, and terephthalic acid, and PA PDA-T based on Phenylenediamine and terephthalic acid

In the composition according to the invention the at least one polyamide is preferably selected from the group consisting of polyamide 12 (PA12), polyamide 6 (PA6), polyamide 66 (PA66), polyamide 610 (PA610), polyamide 612 (PA612), and polyamide 11 (PA11), more preferably the at least one polyamide is polyamide 12, polyamide 6, polyamide 66, and polyamide 11 or a mixture of two or more of these polyamides, most preferably the polyamide is polyamide 12, polyamide 6, or polyamide 66.

The composition according to the invention can comprise any amorphous poly-alpha olefins known in the art. An amorphous poly-alpha olefin according to the invention is defined as an poly-alpha olefin having a heat of fusion (of crystals) of not more than 30 J/g, determined by differential scanning calorimetry (DSC) as described in the example section below. Preferred amorphous poly-alpha olefin used in the present invention show a heat of fusion of from 0.1 to 25 J/g and more preferably of from 2 to 17.5 J/g.

Preferred amorphous poly-alpha-olefins have a melt viscosity at 190 °C of from 2500 to 150000 mPas, more preferably of from 5000 to 60000 mPas viscosity, and/or a softening point of from 80 to 165 °C, more preferably of from 100 to 125 °C, and/or a number average molecular weight Mn of from 5000 to 25000 g/mol, more preferably of from 10000 to 20000 g/mol, and/or a weight average molecular weight Mw of from 25000 to 125000, more preferably of from 40000 to 100000, and/or a density at 23 °C of from 0.865 to 0.9 g/cm³, all values determined using the method given in example section.

Most preferred amorphous poly-alpha-olefins have a melt viscosity at 190 °C of from 5000 to 60000 mPas viscosity, and a softening point of from 100 to 125 °C, and a number average molecular weight Mn of from 10000 to 20000 g/mol, and a weight average molecular weight Mw of from 40000 to 100000, and a density at 23 °C of from 0.865 to 0.9 g/cm³.

The amorphous poly-alpha olefine used in the composition according to the present invention is preferably a homopolymer of propylene, a copolymer of propylene and ethylene, a copolymer of propylene and 1-butene or other higher a-olefins, or a terpolymers of ethylene, propylene, and 1-butene. Most preferably the amorphous poly-alpha olefine is a C₂C₃C₄ terpolymer.

If the amorphous poly-alpha-olefin is based on the monomers ethylene, propylene and 1-butene, the proportion of the monomers propylene or 1-butene is preferably more than 50% by weight and the proportion of the sum of the remaining monomers ethylene and 1-butene or ethylene and propene is in each case less than 50% by weight, in each case based on the sum of the molar proportions of ethylene, propylene and 1-butene.

Most preferred terpolymers used as amorphous poly-alpha-olefin comprise of from 59 to 69 mol-% of C₃-units, of from 27 to 37 mol-% of C₄-units, and of from 3 to 7 mol-% of C₂-units or comprise of from 98 to 99.98 Mol-% of C₄-units, of from 0.01 to 1 mol-% of C₃-units, and of from 0.01 to 1 mol-% of C₂-units.

The composition according to the invention preferably has a viscosity of from 20 to 200 Pas, more preferably 30 to 120 Pas determined at a shear velocity (shear rate) of 1000/sec using the method given in the description.

The Composition is preferably a mixture of the recited constituents, more preferably a pellet mixture of pellets of the recited constituents. It can be advantageous when the blend is in the form of a mixed pellet material in which each pellet contains all constituents. Such mixed pellet materials have the advantage that the processing thereof, for example by injection moulding, affords components in which the constituents are more homogeneously distributed which can result in better material characteristics.

The composition according to the invention may contain further constituents such as for example additives, fillers and/or pigments (organic or inorganic). It might be advantageous that the composition comprises fillers, more preferably fibres, more preferably glass fibres, mineral fibres, wood fibres, carbon fibres or other fibre components, and/or inorganic particles, preferably glass beads, metal or ceramic powders or granules as fillers. This makes it possible to increase the strength of the compositions according to the invention. This allows the compositions to be employed or used in applications which place high mechanical demands on the employed material, such as for example when used as, or for production of, compounds or composites.

The composition preferably comprises from 0.01% to 3% by weight of at least one antioxidant, based on the sum of amorphous poly-alpha olefines and antioxidants. Employable antioxidants include all substances known as antioxidants and/or inhibitors, i.e. substances that stop the propagation of a free-radical reaction. The composition according to the invention preferably contains sterically hindered amines, for example piperidine derivatives, more preferably sterically hindered phenols, such as for example Irganox 1010, Naugard XL1, Songnox 1035. This makes it possible to prevent or reduce degradation of the amorphous poly-alpha olefines and/or yellowing of the amorphous poly-alpha olefines.

The compositions according to the invention may be produced by known processes for producing blends. The compositions according to the invention are preferably produced by the process for producing compositions hereinbelow which is characterized in that the constituents of the blend are commixed.

In the process according to the invention the constituents are preferably employed and mixed as powders or pellets. It may be advantageous when a pellet mixture thus obtained is processed into a mixed pellet material, for example by extruding the pellet mixture. The pellet mixture may thus be applied for example via a mixing drum or using hoppers the pellets may be charged via a mixing funnel and thus homogeneously sent to a further pelletizing process in a mixing extruder before this additive containing pellet material is then subjected to the further processing operations. It is alternatively also possible via a sequence of extruders to meter the components as a melt stream into an extruder which then opens into a moulding process. Furthermore one of these processes may also be used to fabricate the final workpiece directly via an extrusion or injection moulding process without proceeding via the granulate. If an extruder is employed, the extruder is preferably operated at a temperature of the pellet mixture from 180 to 310 °C, preferably 220 to 290 °C.

It may be advantageous when the process according to the invention contains a step which comprises the production of packaging, films, injection moulded parts, pipes, hoses, fibres, textiles, bottles, plastic housings, masterbatch compounds for improved pigment dispersion, manufacturing plastics in the automotive or transport sectors.

The compositions according to the invention may be used as, or for the production of packagings, films, injection moulded parts, pipes, hoses, fibres, textiles, bottles, plastic housings, preferably housings of electrical devices, masterbatch compounds for improved pigment dispersion, manufacturing plastics in the automotive or transport sectors.

Even without further elaboration it is assumed that a person skilled in the art is able to utilize the description above to the greatest possible extent. The preferred embodiments and examples are therefore to be interpreted merely as a descriptive disclosure which is by no means limiting in any way whatsoever.

The subject-matter of the present invention is more particularly elucidated by figures Fig. 1 to Fig. 5 without any intention that the subject-matter of the present invention be restricted thereto.

Fig. 1a shows a graph with the results of the determination the melt viscosity at 280°C as a function of the shear velocity determined with a high-pressure capillary rheometer (HKR) for the compositions according to example 1.

Fig. 1b to 1e show graphs giving the torque (M) in Nm, the power (P) and the rotation speed (n) in rpm obtained when processing the mixtures of examples 1.1 to 1.4 in the Haake Rheomix OS system.

Fig. 2a shows a graph with the results of the determination the melt viscosity at 280°C as a function of the shear velocity determined with a high-pressure capillary rheometer (HKR) for the compositions according to example 2.

Fig. 2b to 2e show graphs giving the torque (M) in Nm, the power (P) and the rotation speed (n) in rpm obtained when processing the mixtures of examples 2.1 to 2.4 in the Haake Rheomix OS system.

Fig. 3a shows a graph with the results of the determination the melt viscosity at 280°C as a function of the shear velocity determined with a high-pressure capillary rheometer (HKR) for the compositions according to example 3.

Fig. 3b to 3e show graphs giving the torque (M) in Nm, the power (P) and the rotation speed (n) in rpm obtained when processing the mixtures of examples 3.1 to 3.4 in the Haake Rheomix OS system.

Fig. 4a shows a graph with the results of the determination the melt viscosity at 280°C as a function of the shear velocity determined with a high-pressure capillary rheometer (HKR) for the compositions according to example 4.

Fig. 4b to 4e show graphs giving the torque (M) in Nm, the power (P) and the rotation speed (n) in rpm obtained when processing the mixtures of examples 4.1 to 4.4 in the Haake Rheomix OS system.

Fig. 5a shows a graph with the results of the determination the melt viscosity at 280°C as a function of the shear velocity determined with a high-pressure capillary rheometer (HKR) for the compositions according to example 5.

Fig. 5b to 5e show graphs giving the torque (M) in Nm, the power (P) and the rotation speed (n) in rpm obtained when processing the mixtures of examples 5.1 to 5.4 in the Haake Rheomix OS system.

Fig. 6a shows a graph with the results of the determination the melt viscosity at 190°C as a function of the shear velocity determined with a high-pressure capillary rheometer (HKR) for the compositions according to example 6.

Fig. 6b to 6e show graphs giving the torque (M) in Nm, the power (P) and the rotation speed (n) in rpm obtained when processing the mixtures of examples 6.1 to 6.4 in the Haake Rheomix OS system.

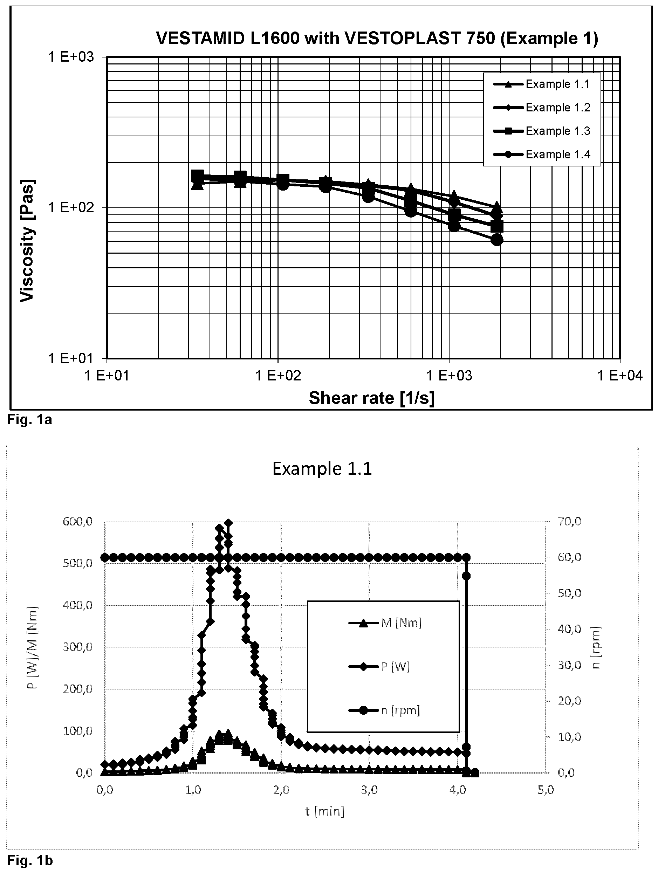

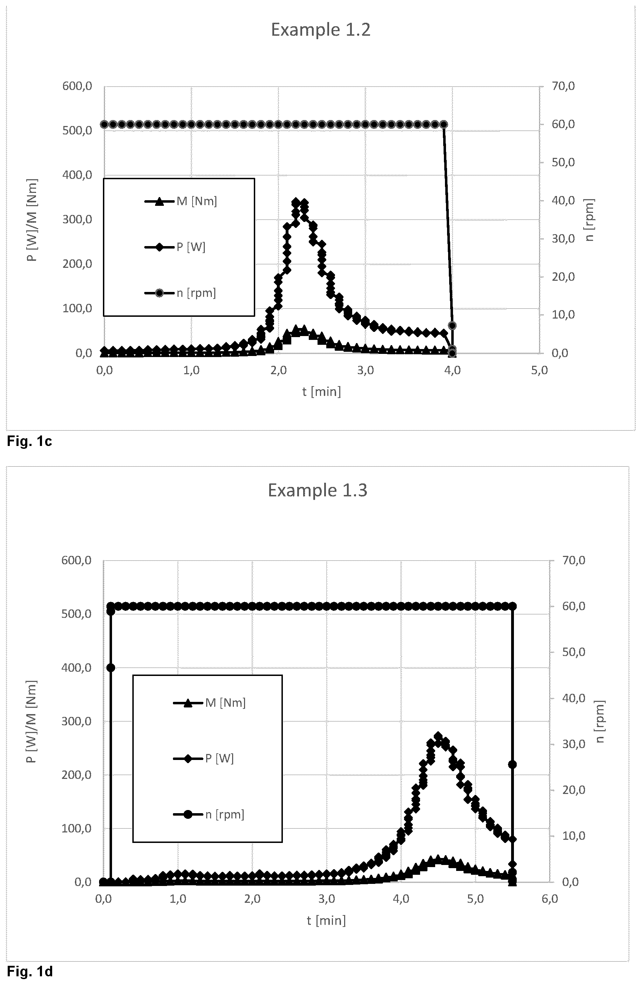

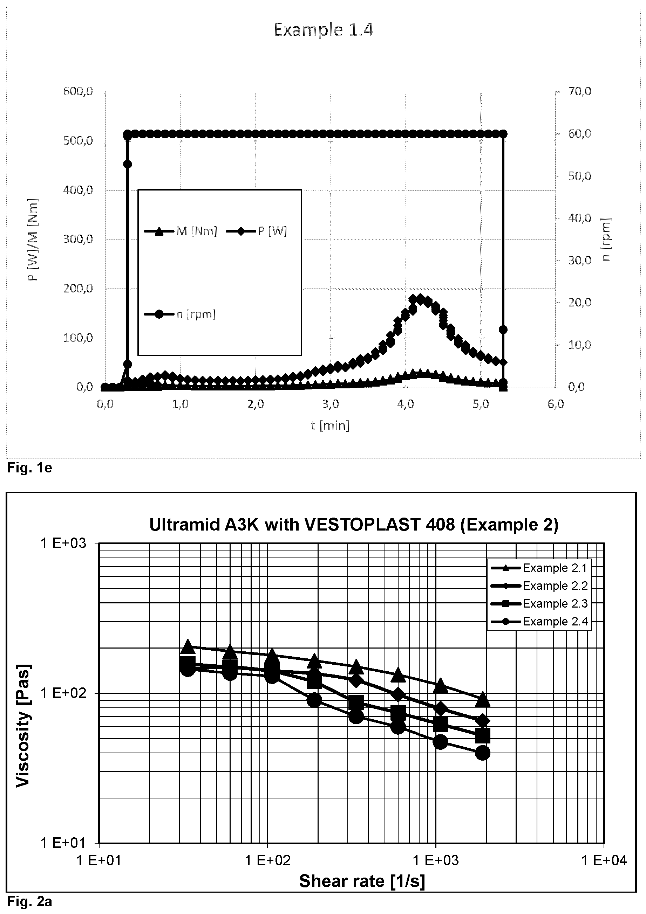

It can be seen from Fig. 1 to Fig. 5 that shear dilution effect occurred when mixing different types of polyamides with amorphous poly-alpha-olefins (APAO).

The subject-matter of the present invention is more particularly elucidated in the examples which follow, without any intention that the subject-matter of the present invention be restricted to these.

### Examples

### Employed substances:

The substances used in the examples are listed in table a below.

**Table a: Employed substances:**

| | | |
|---|---|---|
| APAO (butene-rich terpolymer) | VESTOPLAST^{®} 408 | Evonik Operations GmbH |
| APAO (propene-rich terpolymer) | VESTOPLAST^{®} 750 | Evonik Operations GmbH |
| Polyamide 12 | VESTAMID^{®} L1600 | Evonik Operations GmbH |
| Polyamide 66 | ULTRAMID^{®} A3K | BASF SE |
| Polyamide 6 | ULTRAMID^{®} B3K | BASF SE |

The composition and amount of raw materials used in the examples are given in table b.

**Table b: Employed and amount of raw materials used in examples 1 to 6**

| Example | polyamide used | amount polyamide | APAO used | amount APAO |
|---|---|---|---|---|
| 1.1 | VESTAMID^{®} L1600 | 120 g | VESTOPLAST^{®} 750 | 0 g |
| 1.2 | VESTAMID^{®} L1600 | 117 g | VESTOPLAST^{®} 750 | 3 g |
| 1.3 | VESTAMID^{®} L1600 | 114 g | VESTOPLAST^{®} 750 | 6 g |
| 1.4 | VESTAMID^{®} L1600 | 111 g | VESTOPLAST^{®} 750 | 9 g |
| 2.1 | ULTRAMID^{®} A3K | 240 g | VESTOPLAST^{®} 408 | 0 g |
| 2.2 | ULTRAMID^{®} A3K | 234 g | VESTOPLAST^{®} 408 | 6 g |
| 2.3 | ULTRAMID^{®} A3K | 228 g | VESTOPLAST^{®} 408 | 12 g |
| 2.4 | ULTRAMID^{®} A3K | 222 g | VESTOPLAST^{®} 408 | 18 g |
| 3.1 | ULTRAMID^{®} B3K | 240 g | VESTOPLAST^{®} 408 | 0 g |
| 3.2 | ULTRAMID^{®} B3K | 234 g | VESTOPLAST^{®} 408 | 6 g |
| 3.3 | ULTRAMID^{®} B3K | 228 g | VESTOPLAST^{®} 408 | 12 g |
| 3.4 | ULTRAMID^{®} B3K | 222 g | VESTOPLAST^{®} 408 | 18 g |
| 4.1 | ULTRAMID^{®} A3K | 240 g | VESTOPLAST^{®} 750 | 0 g |
| 4.2 | ULTRAMID^{®} A3K | 234 g | VESTOPLAST^{®} 750 | 6 g |
| 4.3 | ULTRAMID^{®} A3K | 228 g | VESTOPLAST^{®} 750 | 12 g |
| 4.4 | ULTRAMID^{®} A3K | 222 g | VESTOPLAST^{®} 750 | 18 g |
| 5.1 | ULTRAMID^{®} B3K | 240 g | VESTOPLAST^{®} 750 | 0 g |
| 5.2 | ULTRAMID^{®} B3K | 234 g | VESTOPLAST^{®} 750 | 6 g |
| 5.3 | ULTRAMID^{®} B3K | 228 g | VESTOPLAST^{®} 750 | 12 g |
| 5.4 | ULTRAMID^{®} B3K | 222 g | VESTOPLAST^{®} 750 | 18 g |
| 6.1 | VESTAMID^{®} L1600 | 120 g | VESTOPLAST^{®} 408 | 0 g |
| 6.2 | VESTAMID^{®} L1600 | 117 g | VESTOPLAST^{®} 408 | 6 g |
| 6.3 | VESTAMID^{®} L1600 | 114 g | VESTOPLAST^{®} 408 | 12 g |
| 6.4 | VESTAMID^{®} L1600 | 111 g | VESTOPLAST^{®} 408 | 18 g |

### Methods of measurement:

Mixing and determination of parameters were done using a HAAKE Rheomix OS System with the test and data evaluation software PolySoft OS Mixer Software both available from Thermo Fisher Scientific.

### Enthalpy of fusion:

The thermal analysis and especially the enthalpy of fusion is determined by differential scanning calorimetry (DSC) according to DIN 53765 using a Mettler Toledo DSC 3÷. The evaluation is carried out by means of the STAR^{®} SW 16.20 software. The measurement was performed under nitrogen atmosphere using 20 mL/min of nitrogen gas. To remove the influence of thermal history the samples are heated twice and for the determination of the heat of fusion the second heating run was used: The samples were first held at -90 °C for 5 minutes, than heated to 200 °C with a heating rate of 10 K/min, held at 200 °C for 5 minutes, than cooled down to -90 °C with a cooling rate of 10 K/min, held at -90 °C for 5 minutes and again heated to 200 °C (second heating run) with a heating rate of 10 K/min.

### Molecular weight determination:

Mw stands for weight-average molecular weight and Mn stands for number-average molecular weight. The molecular weights Mw and Mn are determined by means of HT-GPC [high-temperature gel permeation chromatography] as described in DIN 55 672. Specifically, analytical HT-GPC is performed at 150°C using a PL220 oven (Agilent, Waldbronn) with integrated isocratic pump. 1,2,4-trichlorobenzene (TCB) (Merck, Darmstadt) spiked with ~ 1 g/L butylhydroxytoluene (BHT) was used as the mobile phase with a flow rate of 1 mL/min and one Agilent PLgel Olexis Guard (50 x 7.5 mm, precolumn) and three Agilent PLgel Olexis (300 x 7.5 mm) columns were used as the stationary phase. Detection was performed by means of an IR detector (model IR4, PolymerChar, Valencia, Spain). The datasets were evaluated using a polystyrene calibration (EasiCal PS-1, Agilent) using WinGPC software (Polymer Standards Service, Mainz). The polydispersity (Mw/Mn), also known as molecular weight distribution, is obtained by dividing the weight-average molecular weight by the number-average molecular weight.

### Viscosity:

The viscosity of the mixtures of examples 1.1 to 6.4 is determined at 190°C, 210 °C, and 280 °C respectively with a Rheograph 6000 from GOTTFERT Werkstoff-Prüfmaschinen GmbH, a high-pressure capillary rheometer in accordance with ISO 11443 using the parameters given in table c.

**Table c:**

| Parameter | Composition of example 1 and 6 | Compositions of examples 2 to 5 |
|---|---|---|
| Measuring nozzle shape | Full circle capillary | Full circle capillary |
| Nozzle geometry | LID = 30/1 [mm/mm]; Inlet angle 180° | LID = 30/1 [mm/mm]; Inlet angle 180° |
| Test channel diameter | 12 mm | 12 mm |
| Pressure transducer | 500 bar | 500 bar |
| Shear rate | 1900 1/s - 19 1/s | 1900 1/s - 19 1/s |
| Test temperature | 210 °C // 190 °C (example 6) | 280 °C |
| Drying of the sample | 16h at 80°C in vacuum, ventilated with N2 | 16h at 80°C in vacuum, ventilated with N2 |
| Other pre-treatment | none | none |
| Measuring time | Filling < 120 s, melting 300 s | Filling < 120 s, melting 300 s |
| Measuring Point Transfer | automatic | |
| Corrections | none | none |

The viscosity of the APAO used was determined using a Brookfield viscosimeter. Calibration of the Brookfield viscometer was carried out using a 500 000 BW Newtonian standard sample. This was obtained from Zentrum für Messen und Kalibrieren & Analytik GmbH and issued with an accompanying calibration certificate. Instrument calibration is performed only upon changing the DKD oil using DKD oil from ZMK& ANALYTIK GmbH. This is performed using cone 7. An initial measurement of the new DKD oil is initially taken. This is followed by calibration of the instrument. The Newtonian standard sample is weighed in directly onto the spindle. This comprises placing it upside down in a 100 ml Erlenmeyer flask and weighing in the appropriate amount. The spindle is subsequently mounted in the viscometer and lowered. After maintaining preheating for at least 3 min, `Spindle' is depressed in the control panel and confirmed with 'Enter'. The prompt 'Calibrate YES / NO' appears. Selecting 'YES' initiates calibration mode. The desired temperature and the dynamic viscosity (see current calibration certificate) of the fluid are subsequently inputted and confirmed. It should be noted here that the viscosity figure must be entered in cP (cP = mPas). In response to the prompt 'SPEED' 10 s-1 is inputted and confirmed with 'Enter'. The calibration is then initiated with 'Run'. After calibration, the calibration value is stored with 'Enter'.

### Softening Point (Ring and Ball):

The softening point (Ring and Ball) is determined according to DIN EN 1427: The material is heated up at 180 °C and then the melt is casted into a ring. After 24 h (this time is needed for recrystallization of the amorphous products) the sample is stressed concentrically with a chrome-plated steel ball and the test frame is immersed in a bath of glycerin. This is heated up at a rate of approx. 5 °C/min. The softening point is the temperature when the ball contacts the baseplate of the test frame.

### Density:

The density at 23 °C was determined according to DIN EN ISO 1183-1 (DIN 53 479).

### Example 1: Compositions comprising a polyamide 12 and an APAO (VESTOPLAST^{®} 750)

The kneader of the HAAKE Rheomix OS System equipped with a "Rotor 3000E" with a roller was heated to 185 °C. VESTAMID^{®} L1600 and different amounts of VESTOPLAST^{®} 750 were added into the large chamber of the kneader (example 1.1 being a comparative example). The kneader was run with a speed of rotation of 60/min. The temperature (T) of the composition in the kneader and the torque (To) of the kneader was determined 1, 2.5 and 4 minutes after addition of the components. After 5 minutes the composition was taken out of the Rheomix OS System. The viscosity of the compositions was tested as described above. The values are given in table 1 and Fig. 1a-e.

**Table 1: values use/obtained in example 1.**

| Example | T 1 in °C | T 2.5 in °C | T 4 in °C | To 1 in Nm | To 2.5 in Nm | To 4 in Nm |
|---|---|---|---|---|---|---|
| 1.1 | 161 | 172.1 | 177 | 3.23 | 54.3 | 8.77 |
| 1.2 | 157 | 168 | 173 | 0.96 | 2.45 | 11.6 |
| 1.3 | 154.4 | 164.9 | 171.6 | 1.72 | 2.39 | 43.07 |
| 1.4 | 152.1 | 167.2 | 173.3 | 2.18 | 4.71 | 28.1 |

### Example 2: Compositions comprising a polyamide 66 and an APAO (VESTOPLAST^{®} 408)

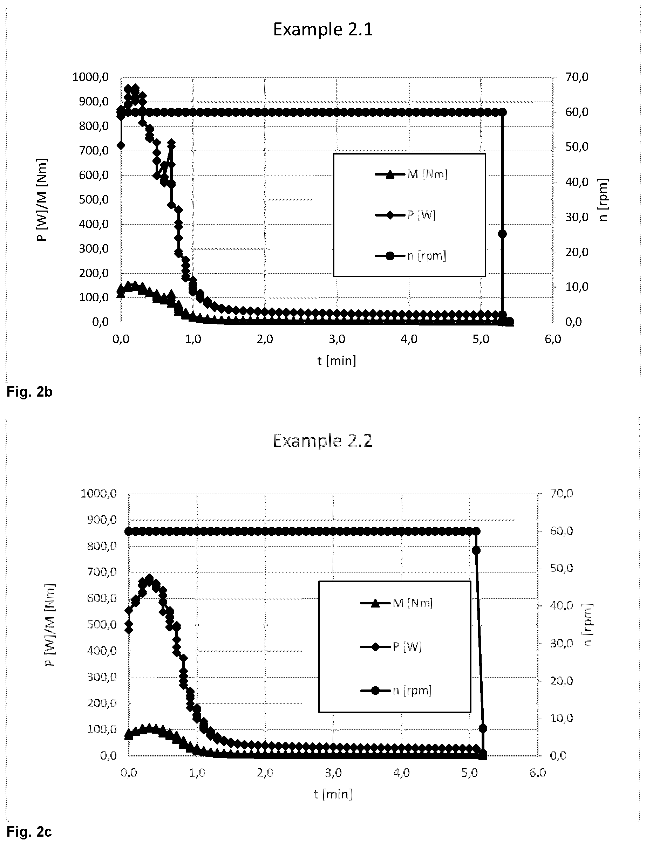

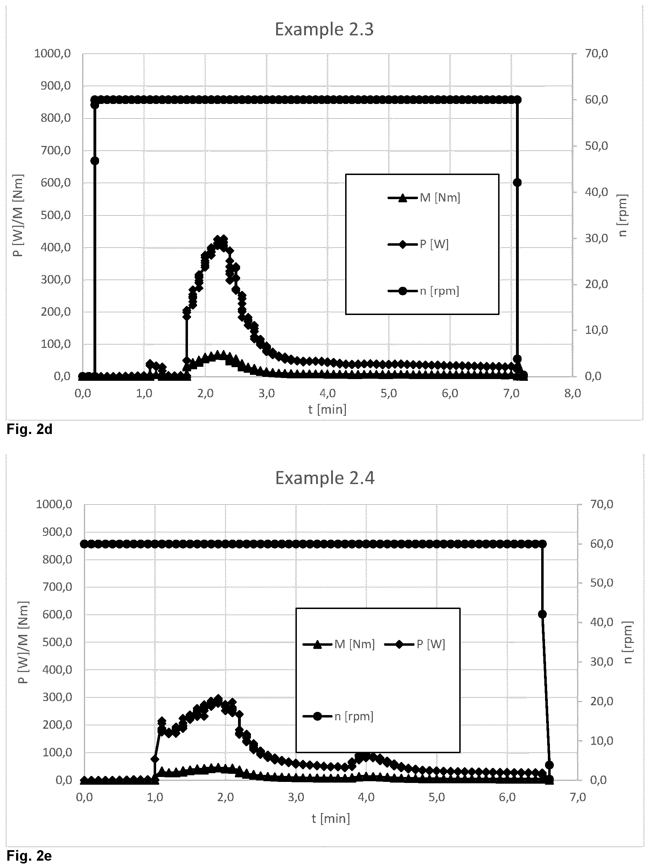

The kneader of the HAAKE Rheomix OS System equipped with a "Rotor 3000E" with a roller was heated to 280 °C. ULTRAMID^{®} A3K and different amounts of VESTOPLAST^{®} 408 were added into the large chamber of the kneader (example 2.1 being a comparative example). The kneader was run with a speed of rotation of 60/min. The temperature (T) of the composition in the kneader and the torque (To) of the kneader was determined 1, 2 and 4 minutes after addition of the components. After 5 minutes the composition was taken out of the Rheomix OS System. The viscosity of the compositions was tested as described above. The values are given in table 2 and Fig. 2a-e.

**Table 2: values used/obtained in example 2.**

| Example | T 1 in °C | T 2 in °C | T 4 in °C | To 1 in Nm | To 2 in Nm | To 4 in Nm |
|---|---|---|---|---|---|---|
| 2.1 | 255.1 | 264.2 | 269.3 | 8.83 | 6.28 | 4.85 |
| 2.2 | 252.2 | 261.3 | 268.3 | 13.89 | 5.89 | 4.83 |
| 2.3 | 251.6 | 262.8 | 269.8 | 9.56 | 5.87 | 5.21 |
| 2.4 | 242.8 | 259.0 | 263.8 | 14.58 | 7.76 | 4.91 |

### Example 3: Compositions comprising a polyamide 6 and an APAO (VESTOPLAST^{®} 408)

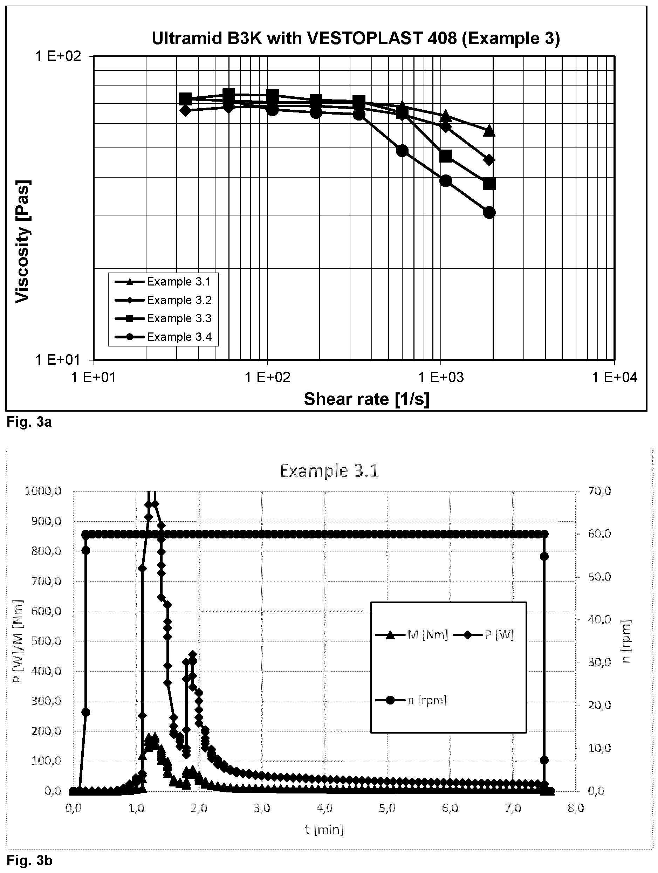

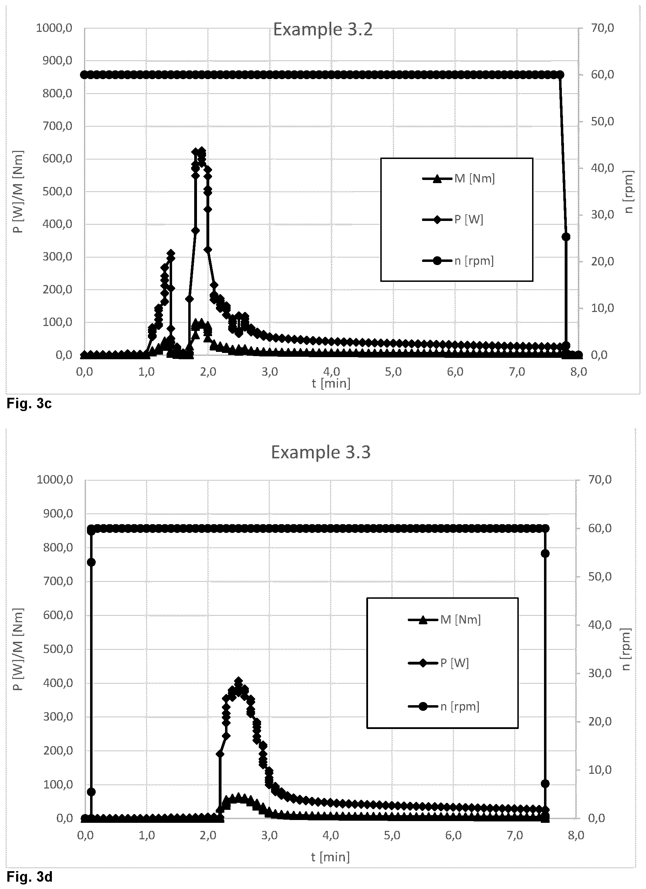

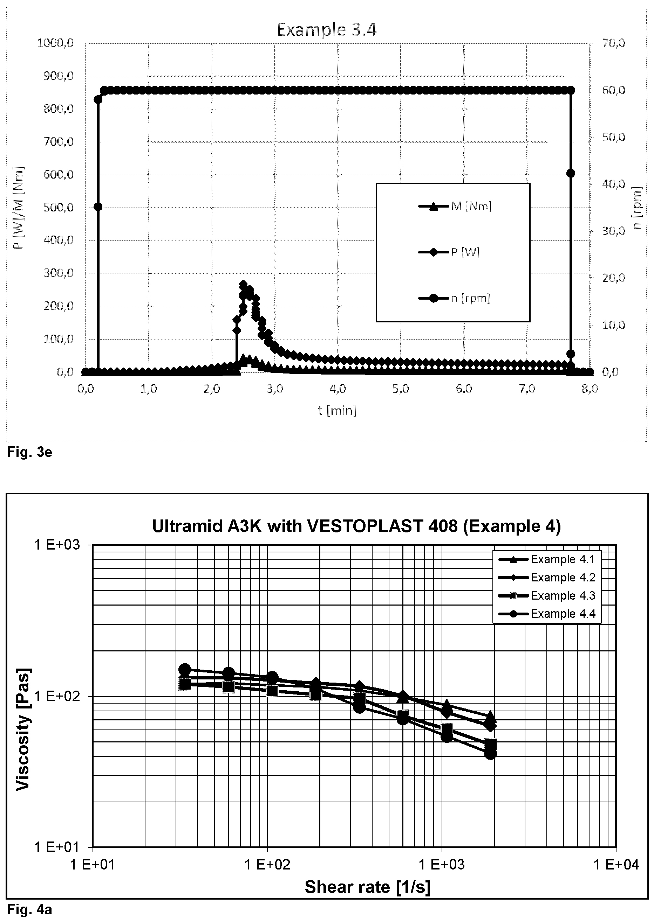

The kneader of the HAAKE Rheomix OS System equipped with a "Rotor 3000E" with a roller was heated to 280 °C. ULTRAMID^{®} B3K and different amounts of VESTOPLAST^{®} 408 were added into the large chamber of the kneader (example 3.1 being a comparative example). The kneader was run with a speed of rotation of 60/min. The temperature (T) of the composition in the kneader and the torque (To) of the kneader was determined 1, 2 and 4 minutes after addition of the components. After 5 minutes the composition was taken out of the Rheomix OS System. The viscosity of the compositions was tested as described above. The values are given in table 3 and Fig. 3a-e.

**Table 3: values used/obtained in example 3.**

| Example | T 1 in °C | T 2 in °C | T 4 in °C | To 1 in Nm | To 2 in Nm | To 4 in Nm |
|---|---|---|---|---|---|---|
| 3.1 | 241.3 | 251.4 | 263.8 | 7.04 | 5.71 | 4.22 |
| 3.2 | 242.8 | 250.6 | 260.3 | 6.77 | 5.70 | 4.29 |
| 3.3 | 229.8 | 240.7 | 255.0 | 7.75 | 6.75 | 4.90 |
| 3.4 | 238.7 | 251.0 | 263.7 | 6.36 | 4.93 | 3.89 |

### Example 4: Compositions comprising a polyamide 66 and an APAO (VESTOPLAST^{®} 750)

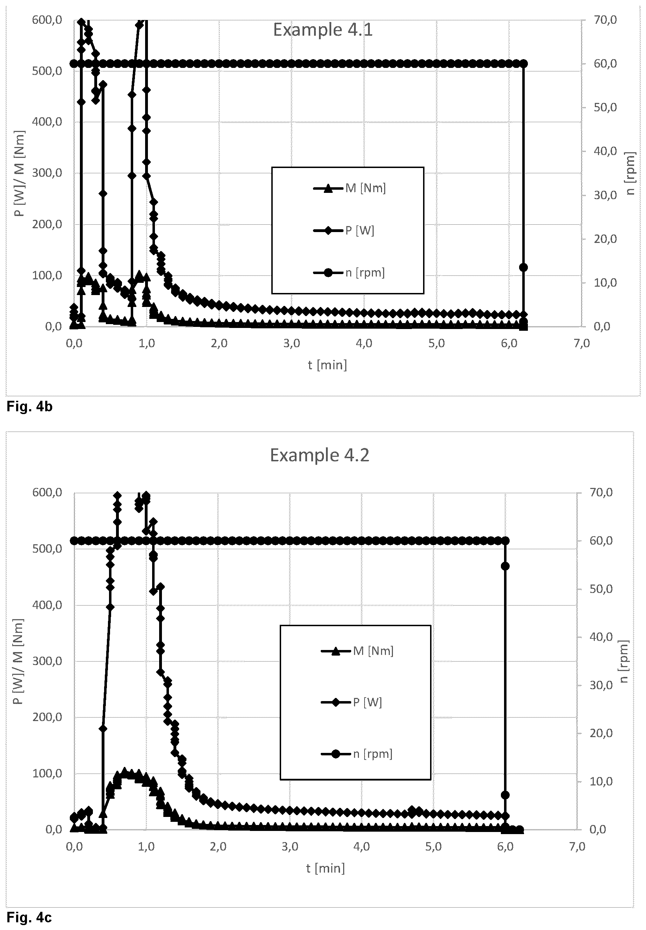

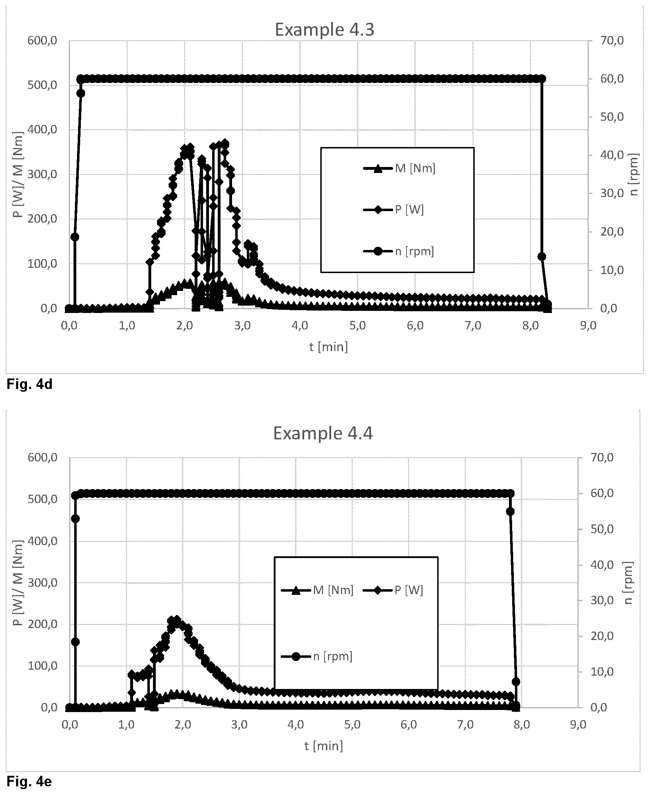

The kneader of the HAAKE Rheomix OS System equipped with a "Rotor 3000E" with a roller was heated to 290 °C. ULTRAMID^{®} A3K and different amounts of VESTOPLAST^{®} 750 were added into the large chamber of the kneader (example 4.1 being a comparative example). The kneader was run with a speed of rotation of 60/min. The temperature (T) of the composition in the kneader and the torque (To) of the kneader was determined 1, 2 and 4 minutes after addition of the components. After 5 minutes the composition was taken out of the Rheomix OS System The viscosity of the compositions was tested as described above. The values are given in table 4 and Fig. 4a-e.

**Table 4: values used/obtained in example 4.**

| Example | T 1 in °C | T 2 in °C | T 4 in °C | To 1 in Nm | To 2 in Nm | To 4 in Nm |
|---|---|---|---|---|---|---|
| 4.1 | 269.8 | 273.0 | 274.0 | 6.01 | 4.62 | 3.88 |
| 4.2 | 260.3 | 269.0 | 273.2 | 6.61 | 5.46 | 4.45 |
| 4.3 | 265.3 | 271.0 | 274.5 | 5.44 | 4.44 | 3.54 |
| 4.4 | 265.0 | 269.0 | 271.0 | 5.63 | 5.72 | 5.02 |

### Example 5: Compositions comprising a polyamide 6 and an APAO (VESTOPLAST^{®} 750)

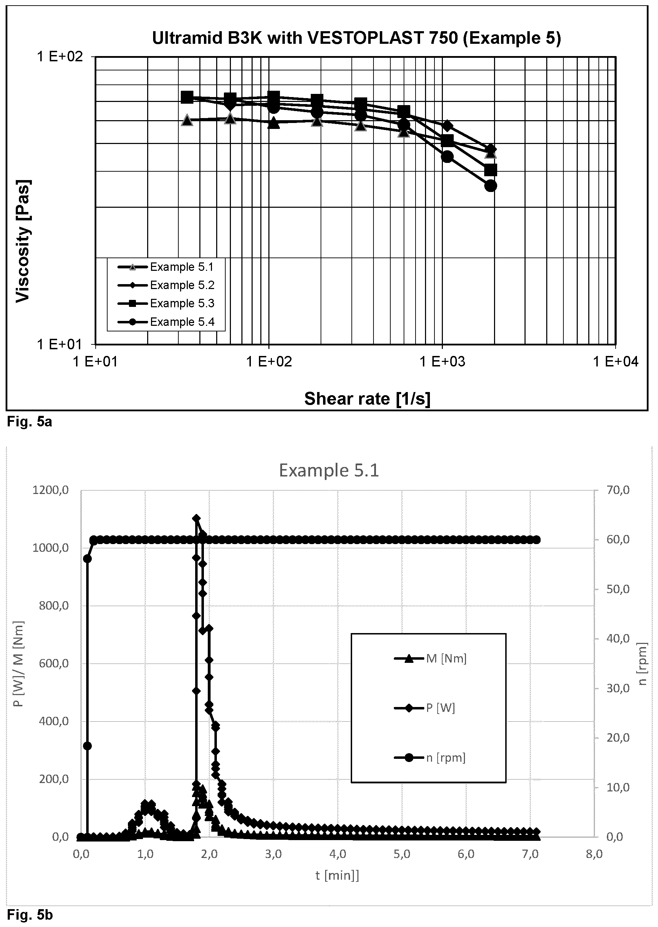

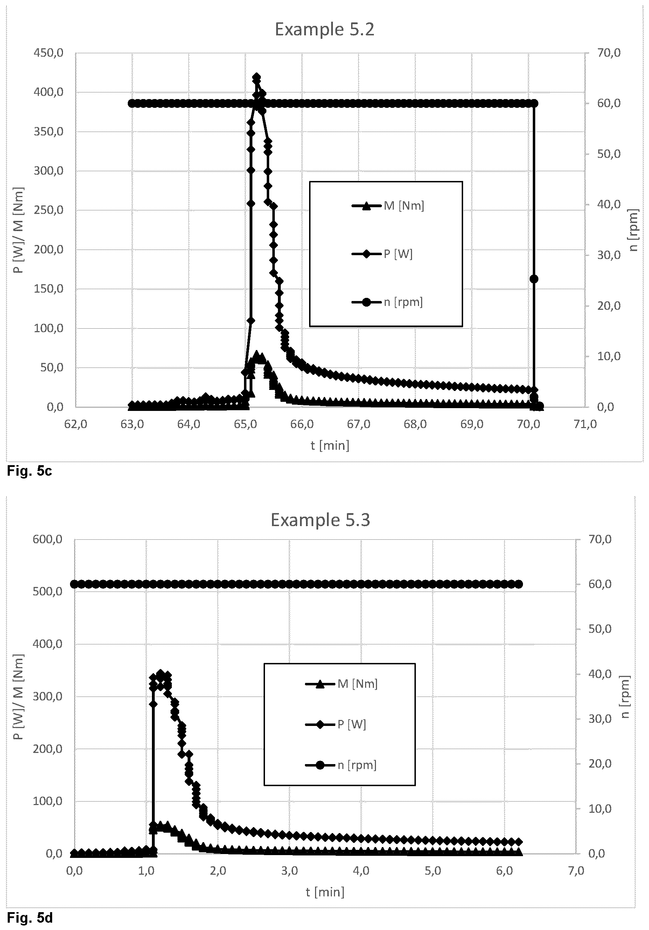

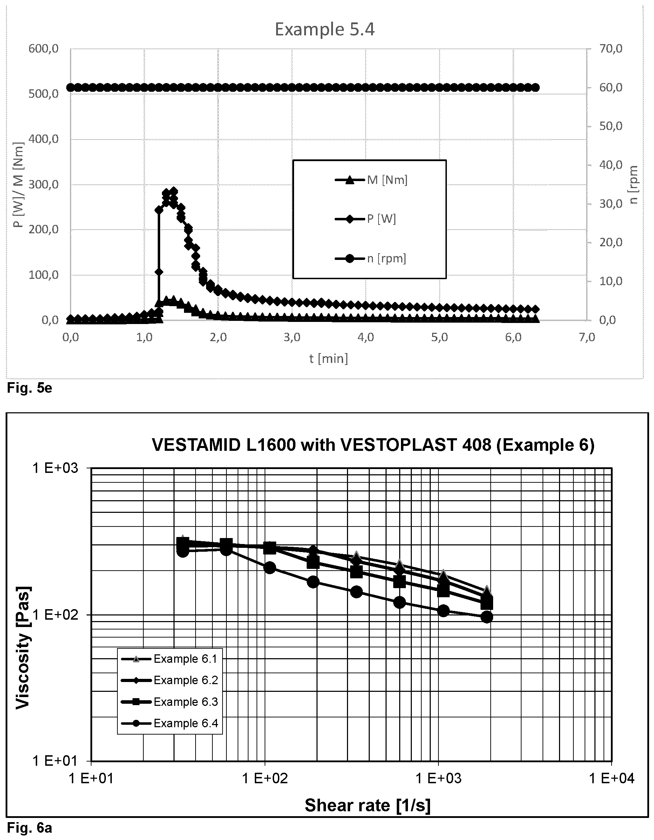

The kneader of the HAAKE Rheomix OS System equipped with a "Rotor 3000E" with a roller was heated to 290 °C. ULTRAMID^{®} B3K and different amounts of VESTOPLAST^{®} 750 were added into the large chamber of the kneader (example 5.1 being a comparative example). The kneader was run with a speed of rotation of 60/min. The temperature (T) of the composition in the kneader and the torque (To) of the kneader was determined 1, 2 and 4 minutes after addition of the components. After 5 minutes the composition was taken out of the Rheomix OS System. The viscosity of the compositions was tested as described above. The values are given in table 5 and Fig. 5a-e.

**Table 5: values used/obtained in example 5.**

| Example | T 1 in °C | T 2 in °C | T 4 in °C | To 1 in Nm | To 2 in Nm | To 4 in Nm |
|---|---|---|---|---|---|---|
| 5.1 | 238.1 | 256.5 | 271.4 | 6.53 | 4.81 | 3.43 |
| 5.2 | 232.0 | 247.0 | 264.0 | 7.76 | 5.71 | 3.92 |
| 5.3 | 228.0 | 249.5 | 267.0 | 8.50 | 5.32 | 3.94 |
| 5.4 | 230.0 | 246.5 | 262.8 | 8.20 | 6.15 | 4.41 |

### Example 6: Compositions comprising a polyamide 12 and an APAO (VESTOPLAST^{®} 408)

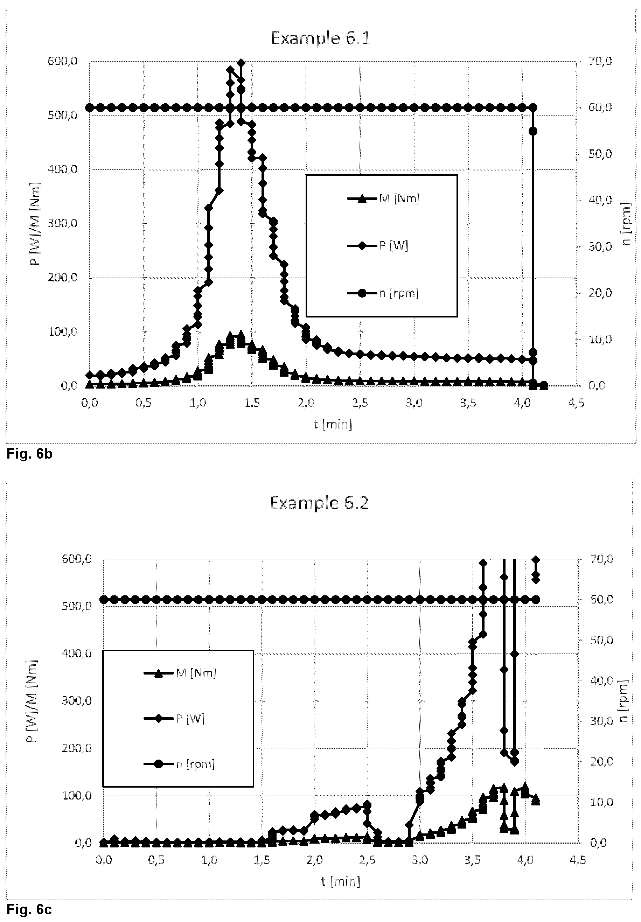

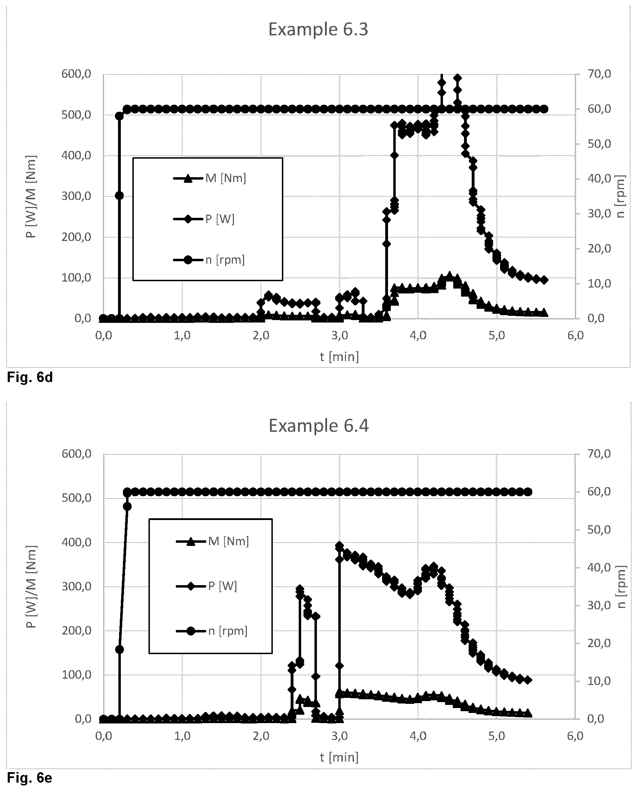

Example 1 was repeated using different amounts of VESTOPLAST^{®} 408 instead of VESTOPLAST^{®} 750. The viscosity of the compositions was tested as described above. The graphs are given in table Fig. 6a-e.

From the figures especially Fig.1a to 6a it can be seen that the addition of an amorphous poly-alpha-olefin to different kinds of polyamides results in lower viscosity at higher shear rates resulting in a better flowability. At lower shear rates the addition of an amorphous poly-alpha-olefin to the different polyamides shows almost no effect on the viscosity of the composition.

With the addition of the amorphous poly-alpha-olefin to the polyamides a shear thinning can be easily achieved. The shear thinning can help to avoid or to modify shrinkage of the final workpiece prepared from the composition according to the invention.

## Claims

1. Composition comprising at least one polyamide, **characterized in that** composition further comprises at least one amorphous poly-alpha-olefin in an amount of 0,1 to 15 % by weight based on the total weight of polyamides and amorphous poly-alpha-olefines present in the composition.

2. Composition according to Claim 1, **characterized in** the at least one polyamide is selected from the group consisting of polyamide 12, polyamide 6, polyamide 66, and polyamide 11, more preferably is polyamide 12, polyamide 6, polyamide 66, and polyamide 11 or a mixture of two or more of these polyamides, most preferably the polyamide is polyamide 12, polyamide 6, or polyamide 66.

3. Composition according to claim 1 or 2, **characterized in that** the composition comprises fillers, more preferably fibres or inorganic particles, most preferably glass fibres, carbon fibres, glass beads, and/or or inorganic particles, preferably glass beads, metal or ceramic powders or granules as fillers metal or ceramic powders or granules.

4. Composition according to any one of the preceding claims, **characterized in that** the composition has a viscosity of from 20 to 200 Pas, more preferably 30 to 120 Pas determined at a shear velocity of 1000/sec.

5. Composition according to any one of the preceding claims, **characterized in that** the amorphous poly-alpha-olefin has a melt viscosity at 190 °C of from 2500 to 150000 mPas, more preferably of from 5000 to 60000 m viscosity, and/or a softening point of from 80 to 165 °C, more preferably of from 100 to 125 °C, and/or a number average molecular weight Mn of from 5000 to 25000 g/mol, more preferably of from 10000 to 20000 g/mol, and/or a weight average molecular weight Mn of from 25000 to 125000, more preferably of from 40000 to 100000, and/or a density at 23 °C of from 0.865 to 0.9 g/cm³.

6. Composition according to any one of the preceding claims, **characterized in that** the amorphous poly-alpha olefine is a C₂C₃C₄ terpolymer.

7. Composition according Claim 6, **characterized in that** the amorphous poly-alpha-olefin is based on the monomers ethylene, propylene and 1-butene, wherein the proportion of the monomers propylene or 1-butene is more than 50% by weight and the proportion of the sum of the remaining monomers ethylene and 1-butene or ethylene and propene is in each case less than 50% by weight, in each case based on the sum of the molar proportions of ethylene, propylene and 1-butene.

8. Composition according to claim 7, characterized that the terpolymer comprises of from 59 to 69 mol-% of C₃-units, of from 27 to 37 mol-% of C₄-units, and of from 3 to 7 mol-% of C₂-units or comprises of from 98 to 99.98 Mol-% of C₄-units, of from 0.01 to 1 mol-% of C₃-units, and of from 0.01 to 1 mol-% of C₂-units.

9. Composition according to any one of the preceding claims, **characterized in that** the poly alpha-olefines are present in an amount of 1 to 10 % by weight based on the total weight of polyamides and amorphous poly-alpha-olefines present in the composition.

10. Process for producing compositions according to any of Claims 1 to 9, **characterized in that** the constituents are commixed.

11. Process according to Claim 10, **characterized in that** the constituents are employed and mixed as powder or pellets.

12. Process according to Claim 11, **characterized in that** the pellet mixture is extruded to afford a mixed pellet material.

13. Process according to Claim 12, **characterized in that** the extruder is operated at a temperature of the pellet mixture from 150 to 200 °C.

14. Use of a composition according to any of Claims 1 to 9 as, or for the production of packagings, films, injection moulded parts, pipes, hoses, fibres, textiles, bottles, plastic housings, masterbatch compounds for improved pigment dispersion, manufacturing plastics in the automotive or transport sectors.
